# EUROPÄISCHE PATENTSCHRIFT

(11) **EP 2 368 926 B1**
(45) Veröffentlichungstag und Bekanntmachung des Hinweises auf die Patenterteilung: **22.05.2013**
(21) Anmeldenummer: 11159071.7
(22) Anmeldetag: 21.03.2011
(51) Int. Cl.: C08G 18/28, C08G 18/70, C08G 18/72, C08G 18/78, C08G 18/79, C08G 18/10, C08G 18/22, C08G 18/62

(54) **Wasseremulgierbare Isocyanate mit verbesserten Eigenschaften**
Water-emulsifiable isocyanates with improved characteristics
Isocyanates hydroémulsifiants ayant des caractéristiques améliorées

(30) Priorität: 25.03.2010 EP 10157811
(43) Veröffentlichungstag der Anmeldung: 28.09.2011
(73) Patentinhaber: BASF SE, 67056 Ludwigshafen (DE)
(72) Erfinder: Steinbrecher, Angelika Maria, 70193 Stuttgart (DE); Tuchbreiter, Lydie, Charlotte, NC, 28210 (US); Lucas, Frederic, 67063 Ludwigshafen (DE); Elizalde, Oihana, Charlotte, NC 28279 (US)

(56) Entgegenhaltungen:
- WO-A1-2004/022624
- DE-A1- 10 350 242

## Beschreibung

### Beschreibung

Die Erfindung betrifft ein Verfahren zur Herstellung von wasseremulgierbaren Isocyanaten und deren Verwendung.

Wasseremulgierbare Polyisocyanate werden wässrigen Polymer-Dispersionen als Vernetzungsmittel zugesetzt und sind in der Literatur vielfach beschrieben. Die Wasseremulgierbarkeit wird dadurch erreicht, dass man die Polyisocyanate mit Emulgatoren abmischt, die durch Reaktion der Polyisocyanate mit hydrophilen Molekülen erhalten werden.

Als hydrophile Moleküle vielfach verwendet werden nichtionische hydrophile Moleküle wie Polyalkylenoxid-Alkohole.

EP-A2 206 059 beschreibt in Wasser dispergierbare Polyisocyanat-Zubereitungen aus einem aliphatischen Polyisocyanat und einem Umsetzungsprodukt eines aliphatischen Polyisocyanats mit einem ein- oder mehrwertigen, nichtionischen Polyalkylenetheralkohol mit mindestens einer mindestens 10 Ethylenoxideinheiten aufweisenden Polyetherkette als Emulgator. Für geeignete Polyisocyanate werden umfangreiche Listen von aliphatischen und cycloaliphatischen Diisocyanaten angegeben, besonders bevorzugt Isocyanurate und Biurete auf Basis von 1,6-Diisocyanatohexan (HDI) und/oder Isocyanurate auf Basis von 1-Isocyanato-3,5,5-trimethyl-5-isocyanatomethylcyclohexan (IPDI).

EP-A1 540 985 beschreibt ebenfalls Polyisocyanatgemische, hier weisen jedoch die Polyetherketten einen mittleren Gehalt von 5,0 bis 9,9 Ethylenoxideinheiten auf.

EP-A2 486 881 beschreibt nichtwäßrige aliphatische Polyisocyanatzubereitungen aus einer Liste von aliphatischen Polyisocyanaten und einer die Dispergierbarkeit des aliphatischen Polyisocyanats gewährleistenden Menge eines Umsetzungsproduktes aus einem aromatischen oder aliphatischen Diisocyanat und einem ein- oder mehrwertigen Polyalkylenetheralkohol mit mindestens 8 Ethylenoxideinheiten in der Polyetherkette.

DE-A1 199 58 170 beschreibt Polyether-modifizierte, wasserdispergierbare Polyisocyanatgemische, die mit einwertigen Polyalkylenoxidpolyetheralkoholen modifiziert sind. Ganz besonders bevorzugt sind Polyisocyanate beziehungsweise Polyisocyanatgemische mit Isocyanuratstruktur auf Basis HDI, IPDI und/oder 4,4'-Diisocyanatodicyclohexylmethan.

DE-A1 198 22 890 beschreibt wäßrige, zweikomponentige Polyurethan-Beschichtungssysteme, deren Härterkomponente aus Polyalkylenoxidpolyetheralkoholen und aliphatisch und/oder cycloaliphatisch gebundenen Isocyanatgruppen, bevorzugt Isocyanuratstrukturen auf Basis von HDI, IPDI und/oder 4,4'-Diisocyanatodicyclohexylmethan, unter Allophanatisierungsbedingungen hergestellt werden. Die überwiegende Bindung von Polyetherketten über Allophanatgruppen ist auch aus der DE-A1 198 47 077 bekannt.

Als nichtionische Emulgatoren sind auch mit Polyvinylpyrrolidon modifizierte Polyisocyanate beschrieben (EP-A2 754 713).

Als dispergieraktive Bausteine finden auch Carbonsäuregruppen enthaltende Polyalkylenoxidether Verwendung, wie in der DE-A1 100 07 820 und DE-A1 41 13 160 beschrieben, oder Polyetheresteralkohole (EP-A1 728 785).

DE-A1 40 01 783 beschreibt Polyisocyanatgemische, die bei einem Uretdiongehalt von 1 bis 23 Gew% zur Dispergierbarkeit chemisch gebundene Carboxylgruppen enthalten.

Weiterhin werden Carboxylgruppen enthaltende Verbindungen als Emulgatoren beschrieben (EP-A2 548 669), tertiäre Amino- und/oder Ammoniumgruppen (EP-A1 582 166 und EP-A1 531 820), saure Ester der Phosphorsäure (DE-A1 197 24 199) oder Sulfonsäuren (EP-A1 703 255).

Nachteilig an den beschriebenen Polyisocyanatmischungen ist, daß diese die Anforderungen, die an die Härte der mit ihnen erhältlichen Beschichtungen gestellt werden, nicht erfüllen.

Wasseremulgierbare Isocyanate können zur Verbesserung der Dispergierbarkeit in organischen Lösungsmitteln wie z.B. Kohlensäureestern oder Lactonen gelöst werden, wie in der EP-A 697 424 beschrieben.

Aus "Lackharze" (Ed. D. Stoye und W. Freitag, Hanser 1996, S. 195) ist bekannt, dass IPDI-Trimerisat, das Lackharzen eine vergleichsweise hohe Härte bis hin zur Sprödigkeit verleiht, häufig in Abmischungen mit HDI-Derivaten zum Einsatz kommt, um die Härte zu vermindern.

WO 2004/22624 beschreibt wasseremulgierbare Mischungen von Polyisocyanaten auf Basis 1,6-Hexamethylendiisocyanat mit Polyisocyanaten auf Basis von Isophorondiisocyanat, die sowohl eine hohe Härte als auch gute Wasseremulgierbarkeit zeigen.

Jedoch sind die Trocknungseigenschaften der mit diesen Beschichtungsmassen erhaltenen Beschichtungen unzureichend.

Folgende Eigenschaften eines wasseremulgierbaren Isocyanats werden vom Anwender verlangt:
1. Das Isocyanat soll einfach zu emulgieren sein; die zwingende Verwendung anspruchsvoller Apparate wie z.B. hochscherenden Rührorganen ist nicht erwünscht.
2. Die Emulsion soll feinteilig sein, da ansonsten Störungen z.B des Glanzes oder Trübungen auftreten können.
3. Bei Beschichtungen ist häufig eine hohe Endhärte erwünscht.
4. Die Endhärte soll möglichst rasch erreicht werden.

Aufgabe der vorliegenden Erfindung war es, ein Verfahren zur Herstellung von wasseremulgierbare Polyisocyanate zur Verfügung zu stellen, die verbesserte Emulgierbarkeitseigenschaften zeigen und mit denen Beschichtungen mit hoher Härte, schnellem Härteanstieg und gleichzeitig verbesserter Emulgierbarkeit hergestellt werden können. Diese sollten schneller trocknen, als vergleichbare Mischungen aus dem Stand der Technik.

Die Aufgabe wurde gelöst durch ein Verfahren zur Herstellung von Mischungen, enthaltend
(A) ein Isocyanurat und/oder Biuret des 1,6-Diisocyanatohexan (HDI),
(B) ein Isocyanurat des 1-Isocyanato-3,5,5-trimethyl-5-isocyanatomethyl-cyclohexan (IPDI),
(C) mindestens einen Emulgator, erhältlich durch Umsetzung des Isocyanurats und/oder Biurets des 1,6-Diisocyanatohexan (HDI) und Isocyanurat des 1-Isocyanato-3,5,5-trimethyl-5-isocyanatomethyl-cyclohexan (IPDI) mit einer Komponente (C1), die mindestens eine gegenüber Isocyanatgruppen reaktive Gruppe und mindestens eine hydrophile Gruppe enthält, und
(D) gegebenenfalls Lösungsmittel, in dem man
in einem ersten Schritt zumindest einen Teil des Isocyanurates (B) mit einer Komponente (C1), die mindestens eine gegenüber Isocyanatgruppen reaktive Gruppe und mindestens eine hydrophile Gruppe enthält, umsetzt und anschließend in einem zweiten Schritt in Gegenwart des aus dem ersten Schritt erhaltenen Reaktionsgemisches zumindest einen Teil des Isocyanurats und/oder Biurets des 1,6-Diisocyanatohexan (HDI) mit einer Komponente (C1), die mindestens eine gegenüber Isocyanatgruppen reaktive Gruppe und mindestens eine hydrophile Gruppe enthält, umsetzt.

Die Mischungen zeigen leichte Emulgierbarkeit, führen zu einer stabilen und feinteiligen Emulsion und die mit ihnen erhältlichen Beschichtungen zeigen einen raschen Anstieg der Härte und eine hohe Endhärte.

Polyisocyanate (A) sind Isocyanurate (A1) und/oder Biurete (A2) des 1,6-Diisocyanatohexan (HDI). Dies umfaßt erfindungsgemäß solche Polyisocyanate, die zu mindestens 50 Gew%, bevorzugt zu mindestens 66%, besonders bevorzugt zu mindestens 75%, ganz besonders bevorzugt zu mindestens 85 % und insbesondere zu mindestens 95 Gew% Verbindungen der Formel (la) und/oder (Ib), 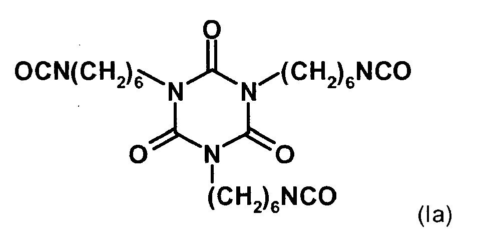 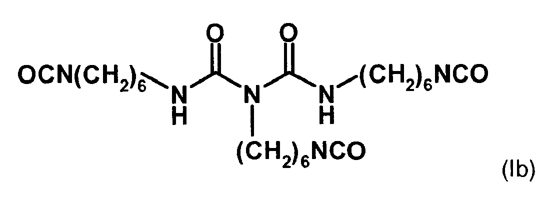 sowie deren höheren Homologen enthalten.

Die Zusammensetzung der Polyisocyanate, also beispielsweise die Anteile an Isocyanuraten und/oder Biureten und deren höheren Homologen, sowie die mittlere Funktionalität werden in dieser Schrift bestimmt durch Gelpermeationschromatographie mit Polystyrol als Standard und Tetrahydrofuran als Elutionsmittel.

Polyisocyanate (B) sind Isocyanurate des 1-Isocyanato-3,5,5-trimethyl-5-isocyanatomethyl-cyclohexan (IPDI). Dies umfaßt erfindungsgemäß solche Polyisocyanate, die zu mindestens 50 Gew%, bevorzugt zu mindestens 66%, besonders bevorzugt zu mindestens 75%, ganz besonders bevorzugt zu mindestens 85 % und insbesondere zu mindestens 95 Gew% die Verbindung der Formel (II), 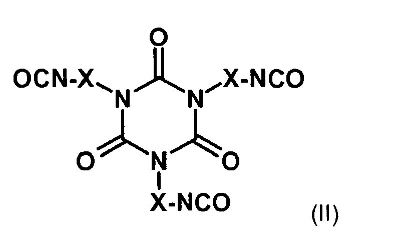 worin X für 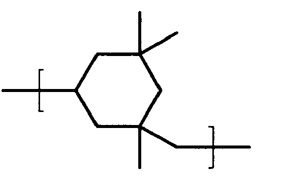 steht,
sowie deren höhere Homologen enthalten.

Als Emulgatoren (C) sind erfindungsgemäß solche Verbindungen geeignet, die durch Umsetzung zumindest eines Teils einer der oben genannten Verbindungen (A) und/oder (B) mit mindestens einer Komponente (C1) erhältlich sind, die mindestens eine gegenüber Isocyanatgruppen reaktive Gruppe und mindestens eine hydrophile Gruppe enthält. (C1) wird im Folgenden als "Hydrophil" bezeichnet.

Gegenüber Isocyanatgruppen reaktive Gruppen sind beispielsweise Hydroxygruppen (-OH), un- oder monosubstituierte Aminogruppen oder Mercaptogruppen (-SH), bevorzugt Hydroxygruppen.

Die Emulgatoren (C) enthalten die Komponente (C1) somit in der Regel chemisch gebunden.

Bei den Komponenten (C1) kann es sich beispielsweise um solche Verbindungen handeln, wie sie im Stand der Technik, beispielsweise aus dem eingangs genannten Stand der Technik, bekannt sind.

Im einzelnen können dies Verbindungen sein, die mindestens eine gegenüber Isocyanatgruppen reaktive Gruppe und
- (C1a) mindestens eine kationische hydrophile Gruppe,
- (C1 b) mindestens eine anionische hydrophile Gruppe oder
- (C1c) mindestens eine nichtionische hydrophile Gruppe
enthält.

Bevorzugte Verbindungen (C1) enthalten 1 bis 3 gegenüber Isocyanatgruppen reaktive Gruppe und 1 bis 3 hydrophile Gruppen, besonders bevorzugt 1 bis 2 gegenüber Isocyanatgruppen reaktive Gruppe und 1 bis 2 hydrophile Gruppen und ganz besonders bevorzugt eine gegenüber Isocyanatgruppen reaktive Gruppe und eine hydrophile Gruppe.

Verbindungen (C1a) enthalten mindestens eine gegenüber Isocyanatgruppen reaktive Gruppe und mindestens eine kationische oder in eine kationische Gruppe überführbare hydrophile Gruppe und sind beispielsweise solche, wie sie in der EP-A1 582 166, dort besonders von S. 5, Z. 42 bis S. 8, Z. 22 und insbesondere von S. 9, Z. 19 bis S. 15, Z. 34, oder in der EP-A1 531 820, dort besonders von S. 3, Z. 21 bis S. 4, Z. 57 oder in DE-A1 42 03 510, dort besonders von S. 3, Z. 49 bis S. 5, Z. 35 beschrieben sind. Auf diese Schriften wird im Rahmen der vorliegenden Offenbarung hiermit ausdrücklich Bezug genommen.

Verbindungen (C1 b) enthalten mindestens eine gegenüber Isocyanatgruppen reaktive Gruppe und mindestens eine anionische oder in eine anionische Gruppe überführbare hydrophile Gruppe und sind beispielsweise solche, wie sie in der EP-A1 703 255, dort besonders von S. 3, Z. 54 bis S. 4, Z. 38, in der DE-A1 197 24 199, dort besonders von S. 3, Z. 4 bis Z. 30, in der DE-A1 40 10 783, dort besonders von Sp. 3, Z. 3 bis Z. 40, in der DE-A1 41 13 160, dort besonders von Sp. 3, Z. 63 bis Sp. 4, Z. 4 und in der EP-A2 548 669, dort besonders von S. 4, Z. 50 bis S. 5, Z. 6 beschrieben sind. Auf diese Schriften wird im Rahmen der vorliegenden Offenbarung hiermit ausdrücklich Bezug genommen.

Verbindungen (C1 c) enthalten mindestens eine gegenüber Isocyanatgruppen reaktive Gruppe und mindestens eine nichtionische hydrophile Gruppe und sind beispielsweise solche, wie sie in EP-A2 754 713, dort besonders von S. 3, Z. 31 bis 51, in EP-A2 206 059, dort besonders von S. 8, Z. 33 bis S. 9, Z. 26, in EP-A2 486 881, dort besonders von S. 2, Z. 42 bis 54, in EP-A1 540 985, dort besonders von S. 4, Z. 43 bis 58, in EP-A1 728 785, dort besonders von S. 4, Z. 55 bis S. 5, Z. 54, in EP-A1 959 115, dort besonders von S. 4, Z. 23 bis 46, in DE-A1 199 58 170, dort besonders von S. 4, Z. 22 bis 48 und in DE-A1 100 07 820, dort besonders von S. 4, Z. 10 bis S. 5, Z. 12. Auf diese Schriften wird im Rahmen der vorliegenden Offenbarung hiermit ausdrücklich Bezug genommen.

Bevorzugt handelt es sich bei den Hydrophilen (C1) um Verbindungen (C1 c), die mindestens eine gegenüber Isocyanatgruppen reaktive Gruppe und mindestens eine nichtionische hydrophile Gruppe enthalten.

Besonders bevorzugte Hydrophile (C1c) sind Polyalkylenoxidpolyetheralkohole, die durch Alkoxylierung geeigneter Startermoleküle erhältlich sind.

Geeignete Startermoleküle zur Herstellung einwertiger Polyalkylenoxidpolyetheralkohole sind Thiolverbindungen, Monohydroxyverbindungen der allgemeinen Formel

R¹-O-H

oder sekundäre Monoamine der allgemeinen Formel

R²R³N-H,

in welchen

R¹, R² und R³ unabhängig voneinander unabhängig voneinander jeweils C₁ - C₁₈-Alkyl, gegebenenfalls durch ein oder mehrere Sauerstoff- und/oder Schwefelatome und/oder ein oder mehrere substituierte oder unsubstituierte Iminogruppen unterbrochenes C₂-C₁₈-Alkyl, C₆ - C₁₂-Aryl, C₅ - C₁₂-Cycloalkyl oder einen fünf- bis sechsgliedrigen, Sauerstoff-, Stickstoff- und/oder Schwefelatome aufweisenden Heterocyclus bedeuten oder R² und R³ gemeinsam einen ungesättigten, gesättigten oder aromatischen und gegebenenfalls durch ein oder mehrere Sauerstoff- und/oder Schwefelatome und/oder ein oder mehrere substituierte oder unsubstituierte Iminogruppen unterbrochenen Ring bilden, wobei die genannten Reste jeweils durch funktionelle Gruppen, Aryl, Alkyl, Aryloxy, Alkyloxy, Halogen, Heteroatome und/oder Heterocyclen substituiert sein können.

Bevorzugt ist R¹ C₁- bis C₄-Alkyl, d.h. Methyl, Ethyl, *iso*-Propyl, n-Propyl, n-Butyl, *iso*Butyl, *sek*-Butyl oder *tert*-Butyl, besonders bevorzugt ist R¹ Methyl.

Beispielsweise geeignete einwertige Startermoleküle können gesättigte Monoalkohole wie Methanol, Ethanol, nPropanol, Isopropanol, n-Butanol, Isobutanol, sec-Butanol, die isomeren Pentanole, Hexanole, Octanole und Nonanole, n-Decanol, nDodecanol, n-Tetradecanol, n-Hexadecanol, n-Octadecanol, Cyclohexanol, Cyclopentanol, die isomeren Methylcyclohexanole oder Hydroxymethylcyclohexan, 3-Ethyl-3-hydroxymethyloxetan, oder Tetrahydrofurfurylalkohol; ungesättigte Alkohole wie Allylalkohol, 1,1Dimethyl-allylalkohol oder Oleinalkohol, aromatische Alkohole wie Phenol, die isomeren Kresole oder Methoxyphenole, araliphatische Alkohole wie Benzylalkohol, Anisalkohol oder Zimtalkohol; sekundäre Monoamine wie Dimethylamin, Diethylamin, Dipropylamin, Diisopropylamin, Di-n-butylamin, Diisobutylamin, Bis-(2-ethylhexyl)-amin, N-Methyl- und N-Ethylcyclohexylamin oder Dicyclohexylamin, heterocylische sekundäre Amine wie Morpholin, Pyrrolidin, Piperidin oder 1H-Pyrazol, sowie Aminoalkohole wie 2Dimethylaminoethanol, 2-Diethylaminoethanol, 2-Diisopropylaminoethanol, 2-Dibutylaminoethanoi, 3-(Dimethylamino)-1-propanol oder 1 (Dimethylamino)-2-propanol.

Für die Alkoxylierungsreaktion geeignete Alkylenoxide sind Ethylenoxid, Propylenoxid, *iso*-Butylenoxid, Vinyloxiran und/oder Styroloxid, die in beliebiger Reihenfolge oder auch im Gemisch bei der Alkoxylierungsreaktion eingesetzt werden können.

Bevorzugte Alkylenoxide sind Ethylenoxid, Propylenoxid und deren Gemische, besonders bevorzugt ist Ethylenoxid.

Bevorzugte Verbindungen (C1c) sind Polyetheralkohole auf Basis von Polyalkylenoxidpolyetheralkoholen, bei deren Herstellung gesättigte aliphatische oder cycloaliphatische Alkohole der oben genannten Art als Startermoleküle eingesetzt wurden. Ganz besonders bevorzugt sind solche auf Basis von Polyalkylenoxidpolyetheralkoholen, die unter Verwendung von gesättigten aliphatischen Alkoholen mit 1 bis 4 Kohlenstoffatomen im Alkylrest hergestellt wurden. Insbesondere bevorzugt sind auf Methanol gestartete Polyalkylenoxidpolyetheralkohole.

Die einwertigen Polyalkylenoxidpolyetheralkohole weisen im statistischen Mittel in der Regel 5 bis 35, vorzugsweise 7 bis 30, besonders bevorzugt 7 bis 25, ganz besonders bevorzugt 10 bis 22 Alkylenoxideinheiten pro Molekül auf, insbesondere 10 bis 22 Ethylenoxideinheiten.

Bevorzugte Polyetheralkohole (C1 c) sind somit Verbindungen der Formel

R¹-O-[-Xᵢ-]ₖ-H

worin

R¹ die oben genannten Bedeutungen hat,

k für eine ganze Zahl von 5 bis 35, bevorzugt 7 bis 30, besonders bevorzugt 7 bis 25 und insbesondere 10 bis 22 steht und

jedes Xᵢ für i = 1 bis k unabhängig voneinander ausgewählt sein kann aus der Gruppe -CH₂-CH₂-O-, -CH₂-CH(CH₃)-O-, -CH(CH₃)-CH₂-O-, -CH₂-C(CH₃)₂-O-, -C(CH₃)₂-CH₂-O-, -CH₂-CHVin-O-, -CHVin-CH₂-O-, -CH₂-CHPh-O- und -CHPh-CH₂-O-, bevorzugt aus der Gruppe -CH₂-CH₂-O-, -CH₂-CH(CH₃)-O- und -CH(CH₃)-CH₂-O-, und besonders bevorzugt -CH₂-CH₂-O-worin Ph für Phenyl und Vin für Vinyl steht.

Die Polyetheralkohole können in untergeordneten Mengen noch weitere gegenüber Isocyanaten reaktive Verbindungen mit anionischen oder kationischen Gruppen, beispielsweise mit Carboxylat-, Sulfonat- oder Ammoniumgruppen, als hydrophile Aufbaukomponenten enthalten. Dies ist jedoch weniger bevorzugt.

Zur Herstellung der Mischungen werden erfindungsgemäß zumindest ein Teil, bevorzugt der vollständigen Menge der Ausgangskomponente (B) bei Temperaturen von 40 bis 180°C, vorzugsweise 50 bis 150°C, unter Einhaltung eines NCO-/OH-Äquivalentverhältnisses von 1 : 1 bis 100 : 1, vorzugsweise von 1 : 1 bis 50 : 1, besonders bevorzugt 1,5 : 1 bis 20 : 1 mit zumindest einem Teil der Verbindung (C1) umgesetzt. In Gegenwart des so erhaltenen Reaktionsgemisches werden anschließend zumindest ein Teil, bevorzugt die vollständige Menge der Ausgangskomponente (A) mit der restlichen Menge (C1) umgesetzt.

Die Reaktionsdauer beträgt für jeden der beiden Schritte in der Regel 10 min bis 5 Stunden, bevorzugt 15 min bis 4 Stunden, besonders bevorzugt 20 bis 180 min und ganz besonders bevorzugt 30 bis 120 min.

Zur Beschleunigung der Reaktion können gegebenenfalls geeignete Katalysatoren eingesetzt werden.

Hierbei handelt es sich um die üblichen für diese Zwecke bekannten Katalysatoren, beispielsweise um Metallcarboxylate, Metallchelate oder tertiäre Amine der in der GB-A-0 994 890 beschriebenen Art, um Alkylierungsmittel der in der US-A-3 769 318 beschriebenen Art oder um starke Säuren, wie sie in der EP-A-0 000 194 beispielhaft beschrieben sind.

Geeignete Katalysatoren sind insbesondere Zinkverbindungen, wie z. B. Zink-(II)-stearat, Zink(II)-n-octanoat, Zink-(II)-2-ethyl-I-hexanoat, Zink-(II)-naphthenat oder Zink-(II)-acetylacetonat, Zinnverbindungen, wie z. B. Zinn(II)-n-octanoat, Zinn-(II)-2-ethyl-I-hexanoat, Zinn-(II)-laurat, Dibutylzinnoxid, Dibutylzinndichlorid, Dibutylzinndiacetat, Dibutylzinndilaurat, Dibutylzinndimaleat oder Dioctylzinndiacetat, Aluminium-tri(ethylacetoacetat), Eisen-(III)-chlorid, Kaliumoctoat, Mangan-, Cobalt-, Wismut-, Zn-(II)-, Zr-(IV) oder Nickelverbindungen sowie starke Säuren, wie z. B. Trifluoressigsäure, Schwefelsäure, Chlorwasserstoff, Bromwasserstoff, Phosphorsäure oder Perchlorsäure, oder beliebige Gemische dieser Katalysatoren.

Geeignete, wenngleich weniger bevorzugte Katalysatoren für das Verfahren sind auch solche Katalysatoren, wie sie beispielsweise in der EP-A-0 649 866 Seite 4, Zeile 7 bis Seite 5, Zeile 15 beschrieben sind.

Bevorzugte Katalysatoren für das erfindungsgemäße Verfahren sind Zinkverbindungen der obengenannten Art. Ganz besonders bevorzugt ist die Verwendung von Zink-(II)-n-octanoat, Zink-(II)-2-ethyl-I-hexanoat und/oder Zink-(II)-stearat.

Diese Katalysatoren kommen, falls überhaupt, in einer Menge von 0,001 bis 5 Gew.-%, vorzugsweise 0,005 bis 1 Gew.-%, bezogen auf das Gesamtgewicht der Reaktionspartner zum Einsatz.

Die Polyaddition zur Herstellung der Polyurethanzubereitung kann besonders bevorzugt in Anwesenheit von Cäsiumsalzen erfolgen, wie in DE 10161156beschrieben. Bevorzugte Cäsiumsalze sind dabei Verbindungen, in denen folgende Anionen eingesetzt werden: F⁻, Cl⁻, ClO⁻, ClO₃⁻, ClO₄⁻, Br⁻, J⁻, JO₃⁻, CN⁻, OCN⁻, NO₂⁻, NO₃⁻, HCO₃⁻, CO₃²⁻, S²⁻, SH⁻, HSO₃⁻, SO₃²⁻, HSO₄⁻, SO₄²⁻, S₂O₂²⁻, S₂O₄²⁻, S₂O₅²⁻, S₂O₆²⁻, S₂O₇²⁻, S₂O₈²⁻, H₂PO₂⁻, H₂PO₄⁻, HPO₄²⁻, PO₄³⁻, P₂O₇⁴⁻, (OCₙH₂ₙ₊₁)⁻, (CₙH₂ₙ₋₁O₂)⁻, (CₙH₂ₙ₋₃O₂)⁻ sowie (Cₙ₊₁H₂ₙ₋₂O₄)²⁻, wobei n für die Zahlen 1 bis 20 steht.

Besonders bevorzugt sind dabei Cäsiumcarboxylate, bei denen das Anion den Formeln (CₙH₂ₙ₋₁O₂)⁻ sowie (Cₙ₊₁H₂ₙ₋₂O₄)²⁻ mit n gleich 1 bis 20, gehorcht. Ganz besonders bevorzugte Cäsiumsalze weisen als Anionen Monocarboxylate der allgemeinen Formel (CₙH₂ₙ₋₁O₂)⁻ auf, wobei n für die Zahlen 1 bis 20 steht. Hierbei sind insbesondere zu erwähnen Formiat, Acetat, Propionat, Hexanoat und 2-Ethylhexanoat.

Die Cäsiumsalze werden in Mengen von 0,01 bis 10 mmol Cäsiumsalz pro kg lösungsmittelfreier Ansatz eingesetzt. Bevorzugt werden sie in Mengen von 0,05 bis 2 mmol Cäsiumsalz pro kg lösungsmittelfreier Ansatz verwendet.

Die Cäsiumsalze können dem Ansatz in fester Form, bevorzugt jedoch in gelöster Form zugesetzt werden. Als Lösemittel sind polare, aprotische Lösemittel oder auch protische Lösemittel geeignet. Besonders geeignet sind neben Wasser auch Alkohole; ganz besonders geeignet sind Polyole, wie sie auch sonst als Bausteine für Polyurethane verwendet werden, wie z.B. Ethan-, Propan- und Butandiole. Die Verwendung der Cäsiumsalze erlaubt es, die Polyaddition unter den üblichen Bedingungen zu führen.

Die Zugabe zum Reaktionsgemisch kann dabei nach beliebigen Methoden erfolgen. So ist es beispielsweise möglich, den gegebenenfalls mitzuverwendenden Katalysator entweder der Polyisocyanatkomponente (A), (B) und/oder der Emulgatorkomponente (C1) vor Beginn der eigentlichen Umsetzung zuzumischen. Ebenso ist es möglich, den Katalysator dem Reaktionsgemisch zu einem beliebigen Zeitpunkt während der Reaktion oder im Sinne einer zweistufigen Reaktionsführung auch im Anschluß an die Urethanisierung, d. h. wenn der einem vollständigen Umsatz von Isocyanat und Hydroxylgruppen theoretisch entsprechende NCO-Gehalt erreicht ist, zuzusetzen.

Der Verlauf der Umsetzung kann durch z. B. titrimetrische Bestimmung des NCO-Gehaltes verfolgt werden. Nach Erreichen des angestrebten NCO-Gehaltes wird die Reaktion abgebrochen. Dies kann bei rein thermischer Reaktionsführung beispielsweise durch Abkühlen des Reaktionsgemisches auf Raumtemperatur erfolgen. Bei der Verwendung eines Katalysators der genannten Art wird die Umsetzung im allgemeinen aber durch Zugabe geeigneter Desaktivatoren abgestoppt. Als Desaktivatoren eignen sich beispielsweise anorganische oder organische Säuren, die entsprechenden Säurehalogenide und Alkylierungsmittel. Beispielhaft genannt seien Phosphorsäure, Monochloressigsäure, Dodecylbenzolsulfonsäure, Benzoylchlorid, Dimethylsulfat und vorzugsweise Dibutylphosphat sowie Di-2-ethylhexylphosphat. Die Desaktivierungsmittel können in Mengen von 1 bis 200 Mol-%, vorzugsweise 20 bis 100 Mol-%, bezogen auf die Mole an Katalysator, eingesetzt werden.

Die resultierenden Polyisocyanatgemische weisen in der Regel einen NCO-Gehalt von vorzugsweise 6,0 bis 23,0 Gew.-%, besonders bevorzugt 8,5 bis 22,0 Gew.-% auf.

Die resultierenden Polyisocyanatgemische weisen in der Regel eine Viskosität bei 23 °C von vorzugsweise 0,2 bis 20 Pas, besonders bevorzugt 0,5 bis 8 Pas auf.

In dieser Schrift wird die Viskosität bei 23 °C gemäß DIN EN ISO 3219/A.3 in einem Kegel-Platte-System mit einem Geschwindigkeitsgefälle von 1000 s⁻¹ angegeben, falls nicht anders vermerkt.

Das Verfahren kann gegebenenfalls in einem geeigneten, gegenüber Isocyanatgruppen inerten Lösemittel (D) durchgeführt werden. Geeignete Lösemittel sind beispielsweise die an sich bekannten üblichen Lacklösemittel, wie z. B. Ethylacetat, Butylacetat, Ethylenglykolmonomethyl- oder -ethyletheracetat, 1-Methoxypropyl-2-acetat, 3-Methoxy-n-butylacetat, Aceton, 2-Butanon, *iso*-Butylmethylketon, 4-Methyl-2-pentanon, Cyclohexanon, Cyclopentanon, Toluol, Xylol, Chlorbenzol, Testbenzin, höher substituierte Aromaten, wie sie beispielsweise unter den Bezeichnungen Solventnaphtha^{®}, Solvesso^{®}, Shellsol^{®}, Isopar^{®}, Nappar^{®} und Diasol^{®} im Handel sind, Propylenglykoldiacetat, Diethylenglykoldimethylether, Dipropylenglykoldimethylether, Diethylenglykolethyl- und -butyletheracetat, N-Methylpyrrolidon und N-Methylcaprolactam, sowie bevorzugt Kohlensäureester oder Lactone, die in der EP-A1 697 424, S. 4, Z. 4 bis 32 genannt sind, besonders bevorzugt Dimethylcarbonat, Diethylcarbonat, 1,2-Ethylencarbonat und 1,2-Propylencarbonat, Lactone, wie β -Propiolacton, γ-Butyrolacton, ε-Caprolacton und ε-Methylcaprolacton, aber auch oder beliebige Gemische solcher Lösemittel.

Es ist auch möglich, die Herstellung der Isocyanate zunächst ohne Lösemittel durchzuführen und das so erhältliche Produkt anschließend in einem Lösemittel (D) aufzunehmen.

Die Mischungen enthalten in lösungsmittelfreier Form bevorzugt
(A) 30 - 90 Gew%, bevorzugt 30 bis 85, besonders bevorzugt 50 bis 70 Gew%,
(B) 5 - 70 Gew%, bevorzugt 20 bis 60, besonders bevorzugt 30 bis 50 Gew% und
(C1) 5 - 40 Gew%, bevorzugt 5 bis 30 Gew%,
wobei die Summe aus (A), (B) und (C1) 100 Gew% ergibt und das zur Herstellung des Emulgators (C) hergestellte Isocyanat (A) und/oder (B) jeweils mitgerechnet wird.

Die Verbindung (C1) wird im erfindungsgemäßen Verfahren im Gewichtsverhältnis 20:80 bis 80:20, bevorzugt 30:70 bis 70:30, besonders bevorzugt 40:60 bis 60:40 mit den Komponenten (B) und (A) umgesetzt. In einer bevorzugten Ausführungsform sind von der Gesamtmenge (C1) mindestens 80 Gew% chemisch an die Komponenten (A) und (B) gebunden, bevorzugt mindestens 85 Gew%, besonders bevorzugt mindestens 90 Gew%, ganz besonders bevorzugt mindestens 95 Gew% und insbesondere mindestens 98 Gew%.

Das Lösungsmittel (D) kann bezogen auf die Gesamtmischung in Mengen von 0 bis 60 Gew% anwesend sein, bevorzugt in Mengen von 0 bis 50 Gew%.

Die Mischungen können vorzugsweise in Wasser zur Herstellung wäßriger Dispersionen dispergiert werden, besonders bevorzugt werden die Mischungen in wäßrige Dispersionen eingemischt.

Die Polyisocyanatzubereitung eignet sich zur Modifizierung von wäßrigen Beschichtungsmitteln (Lack, Schutzüberzüge) für z.B. Holz, Holzfurnier, Papier, Pappe, Karton, Textil, Leder, Vlies, Kunststoffoberflächen, Glas, Keramik, mineralische Baustoffe wie Zement-Formsteine und Faserzementplatten, Metalle oder beschichtete Metalle, Klebstoff oder Imprägnierungsmittel, z.B. zum Färben, auf Basis von wäßrigen Dispersionen oder Lösungen eines Feststoffgehaltes von 5 bis 40 Gew.%, vorzugsweise von 5 bis 20 Gew.%. Als Beschichtungsmittel kommen die an sich bekannten wäßrigen Dispersionen von Homo- und Copolymerisaten olefinisch ungesättigter Monomerer oder Polyurethanen oder auch Lösungen von Naturstoffen, wie z.B. von Casein, in Betracht.

Die Polyisocyanatzubereitungen werden den wäßrigen Beschichtungsmitteln im allgemeinen in einer Menge von 1 bis 25, vorzugsweise von 2,5 bis 20 Gew-%, bezogen auf den Feststoffgehalt des Beschichtungsmittels, zugesetzt.

Sie werden in bekannter Weise durch z.B. Spritzen in einer Menge von 5 bis 50 g Feststoff/m² auf das Substrat aufgebracht.

Geeignete Dispersionen von Homo- oder Copolymerisaten olefinisch ungesättigter Monomerer sind z.B. an sich bekannte Dispersionen von Homo oder Copolymerisaten auf Basis von Vinylestern von Carbonsäuren mit 2 bis 18, vorzugsweise 2 bis 4 Kohlenstoffatomen wie insbesondere Vinylacetat, gegebenenfalls mit bis zu 70 Gew.% bezogen auf Gesamtmenge an olefinisch ungesättigten Monomeren, an anderen olefinisch ungesättigten Monomeren und/oder von Homo- oder Copolymerisaten von (Meth)Acrylsäureestern von Alkoholen mit 1 bis 18, vorzugsweise 1 bis 4 Kohlenstoffatomen wie insbesondere (Meth)Acrylsäure-, -methyl-, -ethyl-, -propyl-, -hydroxyethyl-oder-hydroxypropylestern, gegebenenfalls zusammen mit bis zu 70 Gew.% an anderen olefinisch ungesättigten Monomeren und/ oder Butadien-Styrol-Copolymerisaten mit einem Gehalt an Butadien von ca. 20 bis 60 Gew-% und/oder von anderen Dien-Polymerisaten oder -Copolymerisaten wie Polybutadien oder Mischpolymerisaten von Butadien mit anderen olefinisch ungesättigten Monomeren wie z.B. Styrol, Acrylnitril und/oder Methacrylnitril und/oder wäßrige Dispersionen von Polymerisaten bzw. Copolymerisaten des 2-Chlor-butadien-1,3, gegebenenfalls mit anderen olefinisch ungesättigten Monomeren der oben beispielhaft genannten Art, z.B. solchen eines Chlorgehalts von ca. 30 bis 40 Gew.%, insbesondere eines Chlorgehalts von ca. 36 Gew%.

Bevorzugt werden wäßrige Dispersionen von Copolymerisaten aus 90 bis 99,5 Gew% Acrylaten oder Methacrylaten von 1 bis 4 C-Atomen enthaltenden Alkanolen und 0,5 bis 10 Gew%, jeweils bezogen auf das Copolymerisat, von Hydroxyalkylacrylaten und -methacrylaten mit 2 bis 20 C-Atomen im Hydroxyalkylrest, wie Hydroxyethyl-, Hydroxypropyl- oder Hydroxybutylacrylat oder -methacrylat. Solche Dispersionen sind an sich bekannt und in üblicher Weise durch Emulsionspolymerisation herstellbar (s. Houben-Weyl, Methoden der organischen Chemie, 4. Auflage, Bd. E 20, S.217 ff.).

Geeignete wäßrige Polyurethandispersionen sind solche der an sich bekannten Art, wie sie z.B. in US-A 3 479 310, GB-A 1 076 688, US-A 4 108 814, US-A 4 108 814, US-A 4 092 286, DE-A 2 651 505, US-A 4 190 566, DE-A 2 732 131 oder DE-A 2 811 148 beschrieben sind.

Die eingesetzten wäßrigen Dispersionen können die üblichen Hilfs- und Zusatzmittel enthalten. Hierzu gehören beispielsweise Füllstoffe, wie Quarzmehl, Quarzsand, hochdisperse Kieselsäure, Schwerspat, Calciumcarbonat, Kreide, Dolomit oder Talkum, die oft zusammen mit geeigneten Netzmitteln wie z.B. Polyphosphaten wie Natriumhexamethaphosphat, Naphthalinsulfonsäure, Ammonium- oder Natriumpolyacrylsäuresalzen eingesetzt werden, wobei die Netzmittel im allgemeinen in Mengen von 0,2 bis 0,6 Gew%, bezogen auf Füllstoff, zugesetzt werden.

Weitere geeignete Hilfsmittel sind z.B. in Mengen von 0,01 bis 1 Gew.%, bezogen auf die Dispersion, einzusetzende organische Verdickungsmittel wie z.B. Zellulose-Derivate, Alginate, Stärke oder Stärkederivate oder Polyacrylsäure oder in Mengen von 0,05 bis 5 Gew.%, bezogen auf die Dispersion, einzusetzende anorganische Verdickungsmittel wie z.B. Bentonite.

Auch Fungizide zur Konservierung können den Dispersionen zugesetzt werden. Diese kommen im allgemeinen in Mengen von 0,02 bis 1 Gew.-%, bezogen auf die Dispersion, zum Einsatz. Geeignete Fungizide sind beispielsweise Phenolund Kresol-Derivate oder Zinn-organische Verbindungen.

Substrate für Imprägnierungen sind z.B. synthetische oder nichtsynthetische Fasern bzw. deren Gewebe oder Vliese.

Die Mischungen können sehr feinteilig in wäßrigen Dispersionen dispergiert werden. Die erhaltenen Dispersionen sind sehr lagerstabil. Darüber hinaus benötigt man weniger Zusatzmenge des wasseremulgierbaren Polyisocyanats um die gewünschten Eigenschaften der Dispersion einzustellen bzw. bei der Anwendung zu erreichen.

Die Mischungen können selbstverständlich mit üblichen Hilfs- und Zusatzmitteln der Lacktechnologie versetzt werden. Hierzu gehören beispielsweise Entschäumer, Verdicker, Verlaufshilfsmittel, Pigmente, Emulgatoren, Dispergierhilfsmittel und auch Lösemittel. Die gewünschte Verarbeitungsviskosität wird durch Zugabe von Wasser eingestellt.

Zur Herstellung der Dispersionen reichen in den meisten Fällen einfache Emulgiertechniken, z.B. mit einem mechanischen Rührer, oder oftmals auch eine einfache Mischung der beiden Komponenten per Hand aus, um Dispersionen mit sehr guten Eigenschaften zu erzielen. Selbstverständlich können aber auch Mischtechniken mit höherer Scherenergie, wie z.B. Strahldispergierung, eingesetzt werden.

Die die Mischungen enthaltenden Beschichtungsmittel können insbesondere als Grundierungen, Füller, pigmentierte Decklacke und Klarlacke im Bereich Autoreparatur-oder Großfahrzeuglackierung eingesetzt werden. Besonders geeignet sind die Beschichtungsmittel für Anwendungen, in denen eine besonders hohe Applikationssicherheit, Außenwitterungsbeständigkeit, Optik, Lösemittel-, Chemikalien- und Wasserfestigkeit gefordert werden, wie in der Autoreparatur- und Großfahrzeuglackierung.

Die die Mischungen enthaltenden Beschichtungsmittel können nach den unterschiedlichsten Spritzverfahren, wie z.B. Luftdruck-, Airless- oder Elektrostatik-Spritzverfahren unter Verwendung von Ein- oder Zweikomponenten-Spritzanlagen, aber auch durch Spritzen, Spachteln, Rakeln, Bürsten, Rollen, Walzen, Gießen, Laminieren, Hinterspritzen oder Coextrudieren appliziert werden.

Die Trocknung und Aushärtung der Beschichtungen erfolgt im allgemeinen unter normalen Temperaturbedingungen, d.h. ohne Erhitzung der Beschichtung. Die Mischungen können jedoch auch zur Herstellung von Beschichtungen eingesetzt werden, die nach Applikation bei erhöhter Temperatur, z.B. bei 40 - 250°C, vorzugsweise 40 - 150°C und insbesondere bei 40 bis 100°C getrocknet und ausgehärtet werden.

Obwohl in einigen Veröffentlichungen, die die Herstellung wasseremulgierbarer Polyisocyanate zum Gegenstand haben, beispielsweise in der DE-A1 40 01 783, EP-A2 206 059, EP-A2 486 881, EP-A1 540 985 oder DE-A1 199 58 170, Mischungen von Isocyanuraten und/oder Biureten des 1,6-Diisocyanatohexan (HDI) und Isocyanuraten des 1-Isocyanato-3,5,5-trimethyl-5-isocyanatomethyl-cyclohexan (IPDI) mit Emulgatoren innerhalb langer Listen geeigneter Ausgangsisocyanate genannt werden, konnte der Fachmann keiner der obengenannten Veröffentlichungen irgendeinen konkreten Hinweis darauf entnehmen, daß die Mischungen eine verbesserte Härte, einen verbesserten Härteanstieg und eine gleichzeitige leichte Emulgierbarkeit zeigen. Weiterhin zeigen die Mischungen gegenüber dem Stand der Technik eine höhere "Topfzeit", d.i. die Zeitspanne, in der ein Ansatz nach dem Mischen aller Bestandteile verarbeitbar bleibt und sich nicht beispielsweise entmischt oder vorzeitig härtet.

Die folgenden Beispiele sollen die Eigenschaften der Erfindung erläutern, ohne sie aber einzuschränken.

### Beispiele

Als "Teile" seien in dieser Schrift, wenn nicht anders angegeben, "Gewichtsteile" verstanden.

Polyisocyanat A:
HDI-Isocyanurat mit einem NCO-Gehalt von 22,2% und einer Viskosiät von 2800 mPa*s bei 23°C (z.B. Basonat^{®} HI 100 der BASF SE).

Polyisocyanat B:
IPDI-Isocyanurat, 70%ig in Butylacetat gelöst mit einem NCO-Gehalt von 12,1% und einer Viskosiät von 600 mPa*s bei 23°C (z.B. Basonat^{®} IT 170 B der BASF SE).

Polyether A:
Auf Methanol gestartetes und unter Kaliumhydroxidkatalyse hergestelltes, monofunktionelles Polyethylenoxid mit einer OH-Zahl von 112 (nach DIN 53240) und einem Molekulargewicht von 500 g/mol. Die noch anwesenden basischen Katalysatorreste wurden anschließend mit Essigsäure neutralisiert und das Produkt entsalzt. Hierbei wird auch gebildetes Kaliumacetat entfernt.

Vergleichsbeispiel 1:
Wasserdispergierbar funktionalisiertes, auf HDI-basierendes Polyisocyanat gemäß Beispiel 2 der DE 103 50 242.

Vergleichsbeispiel 2:
Es wurden 214g Polyisocyanat A, 100g Polyisocyanat B und 37,5g Polyether A bei 85°C über 7,5 Stunden umgesetzt. Das entsprechende Produkt hat einen NCO-Gehalt von 14,3%, eine Viskosität von 6500 mPas bei 23°C und war nur teilweise Wasserdispergierbar.

### Beispiel 1:

Es wurden 250g Polyisocyanat B und 26,25g Polyether A unter Zusatz von 0,068g Zinkneodecanoat (50%ig in Butylacetat) Katalysator umgesetzt. Nach 1 Stunde bei 80°C betrug der NCO-Gehalt 13,2%. Anschließend wurden 117g Polyisocyanat A und 17,55g Polyether A zugesetzt. Das entsprechende Produkt hat einem NCO-Gehalt von 13,25%, einer Viskosität von 1770 mPas bei 23°C.

Das Produkt wurde vor Verarbeitung 80% ig in Proglyde^{®} DMM gelöst.

Anwendungstechnische Ergebnisse:
Lackformulierung

100 g Joncryl^{®} 8311 (acrylatbasiertes wäßriges Polyol der BASF SE, OH-Zahl 120 mg KOH/g, 42%ig in Wasser) wurde mit 1,74 g Butyldiglycolacetat und 4,25 g Butylgylcolacetat als Filmbildehilfsmittel versetzt. Anschließend wurde der pH-Wert mit 1,05 g einer 50%igen wäßrigen Lösung von Dimethylethylamin auf einen Wert von 8,5 eingestellt. Schließlich wurde die Applikationsviskosität mit 5,80 g Wasser eingestellt und 0,57 g BYK® 340 (Fa. BYK) als Entschäumer zugegeben.

Anschließend wurde das Polyisocyanat per Dispermat eingearbeitet und mit Wasser auf die endgültige Viskosität eingestellt. Die erhaltenen Lacke wurden bei Raumtemperatur.

| Formulierung | Vergleich 1 | Vergleich 2 | Beispiel 1 |
|---|---|---|---|
| Lackkomponente [g] | 50 | | 50 |
| Produkt aus Ver-gleichsbeispiel 1 | 12,2 | | |
| Produkt aus Ver-gleichsbeispiel 2 | | Schlecht disper-gierbar in Wasser | |
| Produkt aus Bei-spiel 1 | | | 13,4 |
| Dest. Wasser | 3,5 | | 4,6 |
| | | | |
| Aussehen | klar | | klar |
| Staubtrocknung [min] | 60 | | 30 |
| Glanz 20° | 89 | | 84 |
| Haze | 39 | | 125 |
| Acetonbeständigkeit [Doppelhübe] | >200 | | >200 |
| Pendeldämpfung [Schläge] | | | |
| Nach 2h | 7 | | 15 |
| Nach 4h | 12 | | 27 |
| Nach 1 Tag | 62 | | 103 |
| Nach 7 Tagen | 78 | | 128 |
| Nach 7 Tagen bei Raumtemperatur und 15h bei 60°C | 105 | | 128 |

### Beispiel 2 aus WO 2004/22624 A1

Zu 6,7 g (0,007 mol) eines auf Methanol gestarteten, monofunktionellen Polyethylenoxids der Molekularmasse 1000 wurden 60 g (0,246 eq NCO) Isocyanat B zugegeben und für 80 min bei 130°C gerührt. Dann wurde auf Raumtemperatur abgekühlt. Man erhält ein festes Polyisocyanat (= b1) mit einem NCO-Gehalt von 15,2 %. Das reine hydrophilierte Isocyanat b1 läßt sich nur unter erheblichen mechanischen Aufwand in Wasser zu einer weißen, grobteiligen Emulsion emulgieren.

Durch Herstellen einer Mischung von Isocyanat a1 aus Beispiel 1 der WO 2004/22624 A1 und b1 bei 100°C erhält man ein leicht emulgierbares Produkt, welches gute Emulgierbarkeit und gute Eigenschaften bezüglich der Lackhärte zeigt.

## Patentansprüche

1. Verfahren zur Herstellung von Mischungen, enthaltend
(A) ein Isocyanurat und/oder Biuret des 1,6-Diisocyanatohexan (HDI),
(B) ein Isocyanurat des 1-Isocyanato-3,5,5-trimethyl-5-isocyanatomethylcyclohexan (IPDI),
(C) mindestens einen Emulgator, erhältlich durch Umsetzung des Isocyanurats und/oder Biurets des 1,6-Diisocyanatohexan (HDI) und Isocyanurat des 1-Isocyanato-3,5,5-trimethyl-5-isocyanatomethyl-cyclohexan (IPDI) mit einer Komponente (C1), die mindestens eine gegenüber Isocyanatgruppen reaktive Gruppe und mindestens eine hydrophile Gruppe enthält, und
(D) gegebenenfalls Lösungsmittel, **dadurch gekennzeichnet, daß** man
in einem ersten Schritt zumindest einen Teil des Isocyanurates (B) mit einer Komponente (C1), die mindestens eine gegenüber Isocyanatgruppen reaktive Gruppe und mindestens eine hydrophile Gruppe enthält, umsetzt und anschließend in einem zweiten Schritt in Gegenwart des aus dem ersten Schritt erhaltenen Reaktionsgemisches zumindest einen Teil des Isocyanurats und/oder Biurets des 1,6-Diisocyanatohexan (HDI) mit einer Komponente (C1), die mindestens eine gegenüber Isocyanatgruppen reaktive Gruppe und mindestens eine hydrophile Gruppe enthält, umsetzt.

2. Verfahren gemäß Anspruch 1, **dadurch gekennzeichnet, daß** die Mischungen in lösungsmittelfreier Form zusammengesetzt sind wie folgt
(A) 30 - 90 Gew%,
(B) 5-70 Gew% und
(C1) 5-40 Gew%,
wobei die Summe aus (A), (B) und (C1) 100 Gew% ergibt und das zur Herstellung des Emulgators (C) hergestellte Isocyanat (A) und/oder (B) jeweils mitgerechnet wird.

3. Verfahren gemäß Anspruch 1 oder 2, **dadurch gekennzeichnet, daß** die Komponente (C1) mindestens eine gegenüber Isocyanatgruppen reaktive Gruppe und mindestens eine nichtionische hydrophile Gruppe enthält.

4. Verfahren gemäß Anspruch 1 oder 2, **dadurch gekennzeichnet, daß** die Komponente (C1) mindestens ein Polyalkylenoxidpolyetheralkohol ist, erhältlich durch Umsetzung mindestens eines gesättigten aliphatischen Alkohols mit 1 bis 4 Kohlenstoffatomen im Alkylrest mit Ethylenoxid, Propylenoxid oder deren Gemischen.

5. Verfahren gemäß Anspruch 4, **dadurch gekennzeichnet, daß** der Polyalkylenoxidpolyetheralkohol im statistisdien Mittel 5 bis 35 Ethylenoxideinheiten pro Molekül aufweist.

6. Verfahren gemäß einem der vorstehenden Ansprüche, **dadurch gekennzeichnet, daß** als Lösungsmittel (D) ein Kohlensäureester oder Lacton verwendet wird.

## Claims

1. A process for the preparation of mixtures comprising
(A) an isocyanurate and/or biuret of 1,6-diisocyanatohexane (HDI),
(B) an isocyanurate of 1-isocyanato-3,5,5-trimethyl-5-isocyanatomethylcyclohexane (IPDI),
(C) at least one emulsifier, obtainable by reacting the isocyanurate and/or biuret of 1,6-diisocyanatohexane (HDI) and isocyanurate of 1-isocyanato-3,5,5-trimethyl-5-isocyanatomethylcyclohexane (IPDI) with a component (C1) which comprises at least one group that is reactive toward isocyanate groups, and at least one hydrophilic group, and
(D) optionally, solvent, which comprises
in a first step reacting at least a part of the isocyanurate (B) with a component (C1) which comprises at least one group that is reactive toward isocyanate groups, and at least one hydrophilic group, and then in a second step, in the presence of the reaction mixture obtained from the first step, reacting at least a part of the isocyanurate and/or biuret of 1,6-diisocyanatohexane (HDI) with a component (C1) which comprises at least one group that is reactive toward isocyanate groups, and at least one hydrophilic group.

2. The process according to claim 1 in solvent-free form wherein the mixtures are combined as follows
(A) 30 - 90% by weight,
(B) 5 - 70% by weight, and
(C1) 5 - 40% by weight,
the sum of (A), (B), and (C1) making 100% by weight, and including in each case the isocyanate (A) and/or (B) used to prepare the emulsifier (C).

3. The process according to claim 1 or 2, wherein component (C1) contains at least one isocyanate-reactive group and at least one nonionic hydrophilic group.

4. The process according to claim 1 or 2, wherein component (C1) is at least one polyalkylene oxide polyether alcohol obtainable by reacting at least one saturated aliphatic alcohol having 1 to 4 carbon atoms in the alkyl radical with ethylene oxide, propylene oxide or a mixture thereof.

5. The process according to claim 4, wherein the polyalkylene oxide polyether alcohol contains on average from 5 to 35 ethylene oxide units per molecule.

6. The process according to any of the preceding claims, wherein a carbonic ester or lactone is used as solvent (D).

## Revendications

1. Procédé pour la préparation de mélanges, contenant
(A) un isocyanurate et/ou un biuret du 1,6-diisocyanatohexane (HDI),
(B) un isocyanurate du 1-isocyanato-3,5,5-triméthyl-5-isocyanatométhylcyclohexane (IPDI),
(C) au moins un émulsifiant qui peut être obtenu par transformation de l'isocyanurate et/ou du biuret du 1,6-diisocyanatohexane (HDI) et l'isocyanurate du 1-isocyanato-3,5,5-triméthyl-5-isocyanato-méthylcyclohexane (IPDI) avec un composant (C1), qui contient au moins un groupe réactif par rapport aux groupes isocyanate et au moins un groupe hydrophile, et
(D) le cas échéant des solvants, **caractérisé en ce que**,
dans une première étape, on met à réagir au moins une partie de l'isocyanurate (B) avec un composant (C1), qui contient au moins un groupe réactif vis-à-vis des groupes isocyanate et au moins un groupe hydrophile, puis, dans une deuxième étape, on met à réagir, en présence du mélange réactionnel obtenu dans la première étape, au moins une partie de l'isocyanurate et/ou du biuret du 1,6-diisocyanatohexane (HDI) avec un composant (C1), qui contient au moins un groupe réactif vis-à-vis des groupes isocyanate et au moins un groupe hydrophile.

2. Procédé selon la revendication 1, **caractérisé en ce que** les mélanges sous une forme exempte de solvant sont composés, de
(A) 30-90% en poids,
(B) 5-70% en poids et
(C1) 5-40% en poids,
où la somme de (A), (B) et (C1) vaut 100% en poids et l'isocyanate (A) et/ou (B) utilisé pour la préparation de l'émulsifiant (C) est inclus dans le calcul.

3. Procédé selon la revendication 1 ou 2, **caractérisé en ce que** le composant (C1) contient au moins un groupe réactif par rapport aux groupes isocyanate et au moins un groupe hydrophile non ionique.

4. Procédé selon la revendication 1 ou 2, **caractérisé en ce que** le composant (C1) est au moins un poly(oxyde d'alkylène)-polyétheralcool pouvant être obtenu par transformation d'au moins un alcool aliphatique saturé comprenant 1 à 4 atomes de carbone dans le radical alkyle avec de l'oxyde d'éthylène, de l'oxyde de propylène ou leurs mélanges.

5. Procédé selon la revendication 4, **caractérisé en ce que** le poly(oxyde d'alkylène)-polyétheralcool présente en moyenne statistique 5 à 35 unités d'oxyde d'éthylène par molécule.

6. Procédé selon l'une quelconque des revendications précédentes, **caractérisé en ce qu'**on utilise, comme solvant (D), un ester de l'acide carbonique ou une lactone.
